# EUROPÄISCHE PATENTSCHRIFT

(11) **EP 0 999 100 B1**
(45) Veröffentlichungstag und Bekanntmachung des Hinweises auf die Patenterteilung: **16.06.2004**
(21) Anmeldenummer: 99121255.6
(22) Anmeldetag: 25.10.1999
(51) Int. Cl.: B60R 21/20

(54) **Luftsackmodul und Verfahren zu dessen Herstellung**
Airbag module and method of manufacturing thereof
Module de coussin gonflable de sécurité et son procédé de fabrication

(30) Priorität: 02.11.1998 DE 19850463
(43) Veröffentlichungstag der Anmeldung: 10.05.2000
(73) Patentinhaber: Delphi Technologies, Inc., Troy, MI 48007 (US)
(72) Erfinder: Zimmerbeutel, Bernd Uwe, 42857 Remscheid (DE); Trimborn, Ralf, 42697 Solingen (DE); Hannemann, Jens, 42329 Wuppertal (DE); Fernandez, Abelardo, 40489 Düsseldorf (DE); Rick, Ulrich, 55595 Roxheim (DE)
(74) Vertreter: Manitz, Finsterwald & Partner GbR

(56) Entgegenhaltungen:
- GB-A- 2 323 572

## Beschreibung

Die Erfindung betrifft ein Luftsackmodul für Kraftfahrzeuge mit einem Gehäuse für einen zusammengefalteten aufblasbaren Luftsack und einem am Gehäuse verriegelbaren Halteelement nach dem Oberbegriff des Anspruchs 1.

Derartige Luftsackmodule sind grundsätzlich bekannt - z.B. aus GB 2 323 572 A - und dienen dazu, einen zusammengefalteten aufblasbaren Luftsack zusammen mit einem Gasgenerator, der den Luftsack im Crashfall aufbläst, als eine Einheit in einem Kraftfahrzeug z.B. als Fahrer-, Beifahrer- oder Seitenairbag zu montieren.

Die Erfindung betrifft außerdem ein Verfahren zur Befestigung eines Halteelements an einem Gehäuse eines derartigen Luftsackmoduls.

Es ist das der Erfindung zugrundeliegende Problem (Aufgabe), ein Luftsackmodul für Kraftfahrzeuge sowie ein Verfahren zur Befestigung eines Halteelements an einem Gehäuse eines derartigen Luftsackmoduls zu schaffen, die ein möglichst einfaches und schnelles Zusammensetzen des Luftsackmoduls gestatten.

Die Lösung dieser Aufgabe erfolgt durch die Merkmale des kennzeichnenden Teils des Anspruchs 1.

Erfindungsgemäß kann das Halteelement ohne zusätzliche Befestigungsmittel wie Klammern, Schrauben oder Nieten verriegelt werden, wodurch die Herstellung des Luftsackmoduls erheblich vereinfacht wird. Die erfin. dungsgemäß vorgesehene Möglichkeit zur Verrastung des Verriegelungsabschnitts mit dem Halteabschnitt des Gehäuses erlaubt es, das Halteelement in einem Arbeitsgang durch eine einzige Relativbewegung zwischen dem Halteelement und dem Gehäuse sicher zu verriegeln. Das Halteelement ist erfindungsgemäß somit als ein auf oder an das Gehäuse steck- oder klippsbarer Halte-Clip ausgebildet.

Erfindungsgemäß weist der an der Gehäusewand angeordnete Vorsprung eine Ablenkfläche auf, die zur Ablenkung des Verriegelungsabschnitts, insbesondere eines freien Endbereiches des Verriegelungsabschnitts, weg von der Gehäusewand ausgebildet ist und bevorzugt unter einem Winkel von etwa 20° bis 60° schräg zur Gehäusewand verläuft.

Mittels einer derartigen Ablenkfläche wird der freie Endbereich des Verriegelungsabschnitts automatisch von der Gehäusewand weg und in eine ein Verrasten mit dem Halteabschnitt des Gehäuses ermöglichende Stellung gesteuert, wenn das Halteelement und das Gehäuse relativ zueinander bewegt werden. Auf diese Weise wird durch die Erfindung eine denkbar einfache und folglich insbesondere für die Massenherstellung vorteilhafte Möglichkeit zum Zusammensetzen eines Luftsackmoduls geschaffen.

Gemäß einer bevorzugten Ausführungsform der Erfindung ist der Verriegelungsabschnitt zwischen dem Halteabschnitt, insbesondere einem in Richtung der Gehäusewand vorstehenden Rastbereich des Halteabschnitts, und einem an der Gehäusewand angeordneten Vorsprung eingeklemmt.

Hierdurch wird der Verriegelungsabschnitt - und damit das Halteelement - im verriegelten Zustand durch den Vorsprung in einer definierten Raststellung relativ zum Gehäuse gehalten. Außerdem wird das Halteelement durch den Vorsprung in seiner verriegelten Stellung derart gesichert, daß das Halteelement und das Gehäuse nicht von selbst außer Eingriff gelangen können.

Gemäß einem weiteren bevorzugten Ausführungsbeispiel der Erfindung begrenzen der Halteabschnitt und die Gehäusewand einen vor dem Vorsprung endenden Zwischenraum für den Verriegelungsabschnitt, wobei bevorzugt der Halteabschnitt sich etwa parallel zur Gehäusewand erstreckt.

In einen derartigen Zwischenraum kann das Halteelement mit seinem Verriegelungsabschnitt eingeführt werden, um auf diese Weise beim Herstellen der Verrastung zwischen dem Gehäuse und dem Halteelement für eine definierte Relativbewegung zwischen dem Halteelement und dem Gehäuse zu sorgen.

Die Lösung der der Erfindung zugrundeliegenden Aufgabe erfolgt des weiteren durch die Merkmale des unabhängigen Verfahrensanspruchs und insbesondere dadurch, daß der Verriegelungsabschnitt des Halteelements mit einem freien Endbereich in Richtung eines an der Gehäusewand angeordneten Vorsprungs bevorzugt etwa parallel zur Gehäusewand bewegt wird, der freie Endbereich des Verriegelungsabschnitts gegen eine bevorzugt schräg zur Gehäusewand verlaufende Ablenkfläche des Vorsprungs gedrückt und dadurch von der Gehäusewand weg abgelenkt wird, und der Verriegelungsabschnitt mit einem Halteabschnitt des Gehäuses verrastet wird.

Erfindungsgemäß wird durch eine Relativbewegung zwischen dem Halteelement und dem Gehäuse das Halteelement in seine Endstellung überführt und dabei der Verriegelungsabschnitt des Halteelements automatisch derart bewegt, daß er beim Erreichen der Endstellung mit dem Halteabschnitt verrastet ist. Folglich kann die Verriegelung des Halteelements am Gehäuse ohne zusätzliche Hilfsmittel und durch lediglich eine einzige Relativbewegung zwischen dem Halteelement und dem Gehäuse erzielt werden.

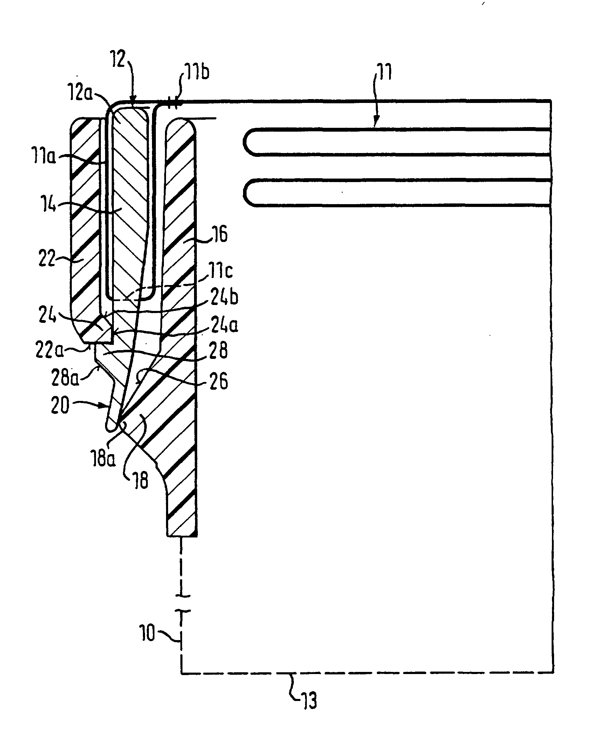

Weitere Ausführungsformen der Erfindung sind in den Unteransprüchen, der Beschreibung sowie der Zeichnung angegeben.

Nachfolgend wird die Erfindung beispielhaft anhand der Zeichnung beschrieben, deren einzige Figur teilweise ein Gehäuse und ein Halteelement einer Ausführungsform eines erfindungsgemäßen Luftsackmoduls zeigt.

Das Luftsackmodul umfaßt gemäß der Figur ein näherungsweise zylindrisches Gehäuse 10, von dem lediglich ein Teil einer Gehäusewand 16 in einer geschnittenen Seitenansicht dargestellt ist. Der übrige Teil der Gehäusewand 16 und ein das Gehäuse 10 verschließender Bodenabschnitt 13 des Gehäuses 10 sind durch eine gestrichelte Linie teilweise angedeutet. Das Gehäuse 10 besteht vorzugsweise aus Kunststoff, kann jedoch auch aus Metall, insbesondere Stahl, hergestellt sein.

Im Gehäuse 10 ist ein in der Figur lediglich teilweise dargestellter und schematisch angedeuteter zusammengefalteter Luftsack 11 angeordnet. Die Befestigung des Luftsacks 11 am Gehäuse 10 erfolgt mittels eines im folgenden näher erläuterten Halteelements 12.

Das Gehäuse 10 weist mehrere in Umfangsrichtung angeordnete, im folgenden anhand des in der Figur gezeigten Beispiels näher beschriebene Bereiche auf, die jeweils einem Verriegelungsabschnitt 14 des ringförmigen Halteelements 12 zugeordnet sind. Das Halteelement 12 ist mit dem zusammengefalteten Luftsack 11 verbunden, wobei die Verriegelungsabschnitte 14 zur Befestigung des Halteelements 12 am Gehäuse 10 dienen.

Im Fall eines zylindrischen Gehäuses 10 besitzt das Halteelement 12 die Form eines Kreisrings mit von einem ringförmigen Abschnitt 12a abstehenden Verriegelungsabschnitten 14. Jedoch können abweichend von dieser Ausgestaltung das Gehäuse 10 und das Halteelement 12 grundsätzlich jede andere, beispielsweise eine etwa rechteckige, Querschnittsform aufweisen.

Die Figur zeigt den Zustand des Luftsackmoduls, in dem sich das Halteelement 12 bereits in seiner Endstellung befindet und am Gehäuse 10 durch Verrasten verriegelt ist.

Außen an der Gehäusewand 16 ist das Gehäuse 10 mit mehreren, jeweils einem Verriegelungsabschnitt 14 des Halteelements 12 zugeordneten Vorsprüngen 18 versehen. Die Vorsprünge 18 sind jeweils mit einer schräg zur Gehäusewand 16 verlaufenden Ablenkfläche 26 versehen, wobei der Winkel zwischen der Ablenkfläche 26 und der Gehäusewand 16 in der gezeigten Ausführungsform etwa 30° bis 35° beträgt, jedoch auch kleiner oder größer gewählt werden kann.

In der Figur oberhalb des Vorsprungs 18 ist die Gehäusewand 16 doppelwandig ausgeführt und mit einem umlaufenden Kragen versehen, der sich parallel zur Gehäusewand 16 erstreckt und als Halteabschnitt 22 dient. Der Halteabschnitt 22 ist an seinem in der Figur unteren Ende mit der Gehäusewand 16 verbunden. Auf diese Weise begrenzen der Halteabschnitt 22 und die Gehäusewand 16 einen Zwischenraum in Form einer umlaufenden Nut. Im Boden dieser Nut sind Aussparungen vorgesehen, durch welche die Verriegelungsabschnitte 14 des Halteelements 12 hindurchgeführt sind.

Der in der Figur untere Randbereich des Halteabschnitts 22 und somit das untere, dem Vorsprung 18 zugewandte Ende des Zwischenraumes ist von der schrägen Ablenkfläche 26 des Vorsprungs 18 beabstandet.

Im Bereich seines in der Figur unteren Endes ist der Halteabschnitt 22 mit einem in Richtung der Gehäusewand 16 vorstehenden Rastbereich 24 versehen. Der Übergangsbereich zwischen der der Gehäusewand 16 zugewandten Seite des Halteabschnitts 22 und dem Rastbereich 24 ist zur Erzielung eines sanfteren Übergangs mit einer Schrägfläche 24b versehen.

Das von der Gehäusewand 16 wegweisende freie Ende 18a des Vorsprungs 18 und das der Gehäusewand 16 zugewandte, eine parallel zur Gehäusewand 16 verlaufende Endfläche 24a aufweisende freie Ende des Rastbereiches 24 des Halteabschnitts 22 liegen näherungsweise in derselben parallel zur Gehäusewand 16 verlaufenden Ebene, wobei das freie Ende 18a geringfügig näher an der Gehäusewand 16 liegt als die Endfläche 24a. Die untere Stirnseite 22a des Halteabschnitts 22 liegt näherungsweise in derjenigen senkrecht zur Gehäusewand 16 verlaufenden Ebene, in der die schräge Ablenkfläche 26 des Vorsprungs 18 in die Gehäusewand 16 übergeht.

Gemäß der Figur ist der Verriegelungsabschnitt 14 des bevorzugt aus Stahl oder Aluminium bestehenden Halteelements 12 durch den Zwischenraum zwischen der Gehäusewand 16 und dem Halteabschnitt 22 hindurchgeführt. In Richtung eines freien Endbereiches 20, mit dem das Verriegelungselement 14 am Vorsprung 18 anliegt, verjüngt sich der Verriegelungsabschnitt 14, wobei der mit dem Vorsprung 18 zusammenwirkende freie Endbereich 20 den Bereich geringster Materialstärke des Verriegelungsabschnitts 14 darstellt.

Auf seiner im verriegelten Zustand von der Gehäusewand 16 abgewandten Seite weist der Verriegelungsabschnitt 14 einen vorsprungartig geformten Rastabschnitt 28 auf, der im verriegelten Zustand den Rastbereich 24 des Halteabschnitts 22 hintergreift.

In der Stellung gemäß der Figur liegt der Rastabschnitt 28 des Verriegelungsabschnitts 14 an der unteren Stirnseite 22a und an der das freie Ende bildenden, unter einem rechten Winkel zur unteren Stirnseite 22a verlaufenden Endfläche 24a des Rastbereiches 24 an. Folglich ist das Verriegelungselement 14 zwischen dem Halteabschnitt 22 und dem Vorsprung 18 relativ zum Gehäuse 10 unbeweglich festgehalten. Der Verriegelungsabschnitt 14 kann derart ausgeführt sein, daß er in der verriegelten und verrasteten Stellung gemäß der Figur elastisch verformt ist, d. h. unter Spannung steht, und somit zwischen der Gehäusewand 16 und dem Halteabschnitt 22 eingeklemmt ist.

Die Verjüngung des Verriegelungsabschnitts 14 in Richtung seines freien Endbereiches 20 wird dadurch erzielt, daß auf der im verriegelten Zustand der Gehäusewand 16 zugewandten Seite Material derart ausgespart wird, daß diese Seite vom ringförmigen Abschnitt 12a des Halteelements 12 bis zum freien Endbereich 20 schräg zur Gehäusewand 16 verläuft, während sich die von der Gehäusewand 16 abgewandte Seite des Verriegelungsabschnitts 14 bis zum Rastabschnitt 28 parallel zur Gehäusewand 16 erstreckt. Der unterhalb des Rastabschnitts 28 gelegene freie Endbereich 20 des Verriegelungsabschnitts 14 ist gegenüber dem ringförmigen Abschnitt 12a des Halteelementes 12 im verriegelten Zustand leicht nach außen abgewinkelt.

Bevor die Verriegelungsabschnitte 14 zur Befestigung des Halteelements 12 am Gehäuse 10 durch den von der Gehäusewand 16 und dem Halteabschnitt 22 gebildeten Zwischenraum hindurchgeführt werden, wird der Luftsack 11 am Halteelement 12 befestigt. Hierzu wird der ringförmige Abschnitt 12a des Halteelements 12, von dem die Verriegelungsabschnitte 14 abstehen, in den Luftsack 11 eingenäht, indem der das offene Ende des Luftsacks 11 begrenzende Randbereich 11a des Luftsacks 11 um das Halteelement 12 herumgeschlagen und mit einem weiter vom offenen Ende entfernten Bereich des Luftsacks 11 vernäht wird. Gemäß der Figur ist die Naht 11b an einer Stelle vorgesehen, die im verriegelten Zustand außerhalb des Gehäuses 10 nahe der Gehäusewand 16 gelegen ist.

Die Verriegelungsabschnitte 14 des Halteelements 12 werden beim Umschlagen des Luftsacks 11 um das Halteelement 12 durch im Luftsack 11 ausgebildete Löcher 11c gesteckt, so daß die Verriegelungsabschnitte 14 aus dem schlauchförmigen Raum, in dem der ringförmige Abschnitt 12a des Halteelements 12 eingenäht ist, herausragen und mit dem Gehäuse 10 in Eingriff gebracht werden können.

Zur Befestigung des Halteelements 12 am Gehäuse 10 wird zunächst das Halteelement 12 mit seinen Verriegelungsabschnitten 14 etwa parallel zur Gehäusewand 16 ausgerichtet.

Anschließend werden das Halteelement 12 und das Gehäuse 10 relativ zueinander derart bewegt, daß die Verriegelungsabschnitte 14 des Halteelements 12 durch den von der Gehäusewand 16 und dem Halteabschnitt 22 gebildeten Zwischenraum hindurchgeführt werden.

Wenn die freien Endbereiche 20 der Verriegelungsabschnitte 14 an die Vorsprünge 18 stoßen, werden sie jeweils in der durch die Ablenkfläche 26 vorgegebenen Richtung von der Gehäusewand 16 weg nach außen abgelenkt. Dadurch werden die Rastabschnitte 28 der Verriegelungsabschnitte 14 nach außen von der Gehäusewand 16 weg gegen die Halteabschnitte 22 gedrückt. Bei Weiterbewegung der Verriegelungsabschnitte 14 in Richtung der Vorsprünge 18 sorgen die Rastbereiche 24 des Halteabschnitts 22 dafür, daß die Verriegelungsabschnitte 14 wieder in Richtung der Gehäusewand 16 bewegt werden. Dabei wirken jeweils die Schrägflächen 24b der Rastbereiche 24 mit den Schrägflächen 28a der Rastabschnitte 28 zusammen. Die Verriegelungselemente 14 werden folglich in ihren freien Endbereichen 20 elastisch verformt, wobei hierzu aufgrund deren vergleichsweise geringer Materialstärke lediglich ein vergleichsweise geringer Kraftaufwand erforderlich ist.

Bei Weiterbewegung des Halteelements 12 in Richtung der Vorsprünge 18 springen die Rastabschnitte 28 schließlich hinter die Rastbereiche 24 des Halteabschnitts 22, wodurch die Verrastung zwischen den Verriegelungsabschnitten 14 und dem Halteabschnitt 22 erzielt und der Zustand gemäß der Figur erreicht ist. Aufgrund der elastischen Verformbarkeit der Verriegelungsabschnitte 14 in den freien Endbereichen 20 können sich die freien Endbereiche 20 nunmehr zumindest teilweise zurückstellen. Dabei ist es von den konkreten geometrischen Verhältnissen abhängig, ob die Verriegelungsabschnitte 14 wieder ihre ursprüngliche Form annehmen oder unter Spannung stehend verbleiben.

### Bezugszeichenliste

- 10: Gehäuse
- 11: Luftsack
- 11a: Randbereich des Luftsacks
- 11b: Naht
- 11c: Loch
- 12: Halteelement
- 12a: ringförmiger Abschnitt des Halteelementes
- 13: Bodenabschnitt des Gehäuses
- 14: Verriegelungsabschnitt
- 16: Gehäusewand
- 18: Vorsprung
- 18a: freies Ende des Vorsprungs
- 20: freier Endbereich des Verriegelungsabschnitts
- 22: Halteabschnitt
- 22a: untere Stirnseite des Halteabschnitts
- 24: Rastbereich des Halteabschnitts
- 24a: Endfläche des Rastbereiches
- 24b: Schrägfläche des Rastbereiches
- 26: Ablenkfläche des Vorsprungs
- 28: Rastabschnitt des Halteelements
- 28a: Schrägfläche des Rastabschnitts

## Patentansprüche

1. Luftsackmodul für Kraftfahrzeuge mit einem Gehäuse (10) für einen zusammengefalteten aufblasbaren Luftsack (11) und einem am Gehäuse (10) verriegelbaren Halteelement (12), wobei das Halteelement (12) wenigstens einen Verriegelungsabschnitt (14) aufweist, der sich im verriegelten Zustand an der Gehäusewand (16) entlang erstreckt und an seiner von der Gehäusewand (16) abgewandten Seite mit einem Halteabschnitt (22) des Gehäuses (10) verrastet ist,
**dadurch gekennzeichnet,**
**daß** ein Vorsprung (18) an der Gehäusewand (16) eine Ablenkfläche (26) aufweist, die zur Ablenkung des Verriegelungsabschnitts (14) weg von der Gehäusewand (16) ausgebildet ist.

2. Luftsackmodul nach Anspruch 1,
**dadurch gekennzeichnet**
**dass** die Ablenkfläche (26) unter einem Winkel von etwa 20° bis 60° schräg zur Gehäusewand (16) verläuft.

3. Luftsackmodul nach Anspruch 1 oder 2,
**dadurch gekennzeichnet,**
**daß** der Verriegelungsabschnitt (14) mittels eines an der Gehäusewand (16) angeordneten Vorsprungs (18) in der verriegelten Stellung gesichert ist.

4. Luftsackmodul nach zumindest einem der vorhengehenden Anspruche,
**dadurch gekennzeichnet,**
**daß** der Verriegelungsabschnitt (14) zwischen dem Halteabschnitt (22), insbesondere einem in Richtung der Gehäusewand (16) vorstehenden Rastbereich (24) des Halteabschnitts (22), und der Gehäusewand (16), insbesondere einem Vorsprung (18), eingeklemmt ist.

5. Luftsackmodul nach zumindest einem der vorhergehenden Ansprüche,
**dadurch gekennzeichnet,**
**daß** der Halteabschnitt (22) und die Gehäusewand (16) einen vor einem Vorsprung (18) endenden Zwischenraum für den Verriegelungsabschnitt (14) begrenzen, wobei bevorzugt der Halteabschnitt (22) sich etwa parallel zur Gehäusewand (16) erstreckt.

6. Luftsackmodul nach zumindest einem der vorhergehenden Ansprüche,
**dadurch gekennzeichnet,**
**daß** der Verriegelungsabschnitt (14), insbesondere ein freier Endbereich (20) des Verriegelungsabschnitts (14), und/oder der Halteabschnitt (22) elastisch verformbar sind.

7. Luftsackmodul nach zumindest einem der vorhergehenden Ansprüche,
**dadurch gekennzeichnet,**
**daß** an der im verriegelten Zustand von der Gehäusewand (16) abgewandten Seite des Verriegelungsabschnitts (14) ein vorsprungartiger Rastabschnitt (28) angeordnet ist, der mit einem Rastbereich (24) des Halteabschnitts (22) verrastbar ist.

8. Luftsackmodul nach zumindest einem der vorhergehenden Ansprüche,
**dadurch gekennzeichnet,**
**daß** ein von der Gehäusewand (16) wegweisendes freies Ende (18a) eines Vorsprungs (18) und ein der Gehäusewand (16) zugewandtes freies Ende, insbesondere eine Endfläche (24a) eines Rastbereiches (24), des Halteabschnitts (22) in unterschiedlichen jeweils etwa senkrecht zur Gehäusewand (16) verlaufenden Ebenen und zumindest näherungsweise in derselben etwa parallel zur Gehäusewand (16) verlaufenden Ebene liegen.

9. Luftsackmodul nach zumindest einem der vorhergehenden Ansprüche,
**dadurch gekennzeichnet,**
**daß** sich der Verriegelungsabschnitt (14) in Richtung eines freien Endbereiches (20) verjüngt und bevorzugt in einem mit einem Vorsprung (18) zusammenwirkenden Bereich, insbesondere seinem freien Endbereich (20), die geringste Materialstärke aufweist.

10. Luftsackmodul nach zumindest einem der vorhergehenden Ansprüche,
**dadurch gekennzeichnet,**
**daß** das Halteelement (12) ringförmig ausgebildet ist und mehrere in Umfangsrichtung verteilt angeordnete Verriegelungsabschnitte (14) aufweist.

11. Luftsackmodul nach zumindest einem der vorhergehenden Ansprüche,
**dadurch gekennzeichnet,**
**daß** das Halteelement (12) aus Stahl oder Aluminium besteht und/oder daß das Gehäuse (10) aus Kunststoff hergestellt ist.

12. Verfahren zur Befestigung eines Halteelements (12) an einem Gehäuse (10) für einen zusammengefalteten aufblasbaren Luftsack (11) eines Luftsackmoduls für Kraftfahrzeuge, wobei das Halteelement (12) wenigstens einen Verriegelungsabschnitt (14) aufweist, bei dem
- der Verriegelungsabschnitt (14) des Halteelements (12) mit einem freien Endbereich (20) in Richtung eines an der Gehäusewand (16) angeordneten Vorsprungs (18) bevorzugt etwa parallel zur Gehäusewand (16) bewegt wird,
- der freie Endbereich (20) des Verriegelungsabschnitts (14) gegen eine bevorzugt schräg zur Gehäusewand (16) verlaufende Ablenkfläche (26) des Vorsprungs (18) gedrückt und dadurch von der Gehäusewand (16) weg abgelenkt wird, und
- der Verriegelungsabschnitt (14) mit einem Halteabschnitt (22) des Gehäuses (10) verrastet wird.

## Claims

1. Airbag module for motor vehicles comprising a housing (10) for a folded inflatable airbag (11) and a holder element (12) which can be locked tohe housing (10), with the holder element (12) having at least one locking section (14) which extends in the locked state along the housing wall (16) and which is latched to a holder section (22) of the housing (10) at its side remote from the housing wall (16),
**characterised in that** a projection (18) at the housing wall (16) has a deflection surface (26) which is designed for the deflection of the locking section (14) away from the housing wall (16).

2. Airbag module in accordance with claim 1, **characterised in that** the deflection surface (26) extends at an inclination to the housing wall (16) at an angle of approximately 20° to 60°.

3. Airbag module in accordance with claim 1 or claim 2, **characterised in that** the locking section (14) is secured in the locked position by means of a projection (18) arranged at the housing wall (16).

4. Airbag module in accordance with at least one of the preceding claims, **characterised in that** the locking section (14) is clamped between the holder section (22), in particular a latching region (24) of the holder section (22) projecting in the direction of the housing wall (16), and the housing wall (16), in particular a projection (18).

5. Airbag module in accordance with at least one of the preceding claims, **characterised in that** the holder section (22) and the housing wall (16) bound an intermediate space for the locking section (14) ending in front of a projection (18), with the holder section (22) preferably extending approximately parallel to the housing wall (16).

6. Airbag module in accordance with at least one of the preceding claims, **characterised in that** the locking section (14), in particular a free end region (20) of the locking section (14), and/or the holder section (22) are elastically deformable.

7. Airbag module in accordance with at least one of the preceding claims, **characterised in that** a projection-like latching section (28) which can be latched to a latching region (24) of the holder section (22) is arranged at the side of the locking section (14) remote from the housing wall (16) in the locked state.

8. Airbag module in accordance with at least one of the preceding claims, **characterised in that** a free end (18a) of a projection (18) pointing away from the housing wall (16) and a free end, in particular an end surface (24a) of a latching region (24), of the holder section (22) which faces the housing wall (16) lie in different planes, which in each case extend approximately perpendicular to the housing wall (16) and at least approximately in the same plane which extends approximately parallel to the housing wall (16).

9. Airbag module in accordance with at least one of the preceding claims, **characterised in that** the locking section (14) contracts in the region of a free end region (20) and preferably has the lowest material strength in a region which cooperates with a projection (18), in particular in its free end region (20).

10. Airbag module in accordance with at least one of the preceding claims, **characterised in that** the holder element (12) is designed in the shape of a ring and has a plurality of locking sections (14) arranged distributed in the peripheral direction.

11. Airbag module in accordance with at least one of the preceding claims, **characterised in that** the holder element (12) consists of steel or aluminium and/or that the housing (10) is manufactured of plastic.

12. Method for the securing of a holder element (12) to a housing (10) for a folded inflatable airbag (11) of an airbag module for motor vehicles, with the holder element (12) having at least one locking section (14) in which
- the locking section (14) of the holder element (12) having a free end region (20) is moved preferably approximately parallel to the housing wall (16) in the direction of a projection (18) which is arranged at the housing wall (16);
- the free end region (20) of the locking section (14) is pressed toward a deflection surface (26) of the projection (18) preferably extending at an inclination to the housing wall (16) and is thereby deflected away from the housing wall (16); and
- the locking section (14) is latched to a holder section (22) of the housing (10).

## Revendications

1. Module de coussin gonflable pour véhicules à moteur, comprenant un boîtier (10) destiné à un coussin gonflable (11) replié et un élément de retenue (12) verrouillable sur le boîtier (10), dans lequel l'élément de retenue (12) présente au moins une section de verrouillage (14), qui, à l'état verrouillé, s'étend le long de la paroi de boîtier (16) et est enclenchée, de son côté opposé à la paroi de boîtier (16), sur une section de retenue (22) du boîtier (10), **caractérisé en ce qu'**une saillie (18) ménagée sur la paroi de boîtier (16) présente une surface de déviation (26), qui est conformée pour dévier la section de verrouillage (14) à écarter de la paroi de boîtier (16).

2. Module de sac gonflable selon la revendication 1, **caractérisé en ce que** la surface de déviation (26) s'étend sous un angle d'environ 20° à 60° en oblique par rapport à la paroi de boîtier (16).

3. Module de sac gonflable selon la revendication 1 ou 2, **caractérisé en ce que** la section de verrouillage (14) est fixée en position verrouillée au moyen d'une saillie (18) ménagée sur la paroi de boîtier (16).

4. Module de sac gonflable selon au moins l'une quelconque des revendications précédentes, **caractérisé en ce que** la section de verrouillage (14) est coincée entre la section de retenue (22), en particulier une zone d'encliquetage (24) faisant saillie dans la direction de la paroi de boîtier (16) de la section de retenue (22), et la paroi de boîtier (16), en particulier une saillie (18).

5. Module de sac gonflable selon au moins l'une quelconque des revendications précédentes, **caractérisé en ce que** la section de retenue (22) et la paroi de boîtier (16) délimitent un espace intermédiaire se terminant devant une saillie (18) pour la section de verrouillage (14), la section de retenue (22) s'étendant plus ou moins parallèlement à la paroi de boîtier (16).

6. Module de sac gonflable selon au moins l'une quelconque des revendications précédentes, **caractérisé en ce que** la section de verrouillage (14), en particulier une zone d'extrémité libre (20) de la section de verrouillage (14), et/ou la section de retenue (22) peuvent se déformer élastiquement.

7. Module de sac gonflable selon au moins l'une quelconque des revendications précédentes, **caractérisé en ce qu'**il est aménagé, sur le côté de la section de verrouillage (14) opposé à la paroi de boîtier (16) à l'état verrouillé, une section d'encliquetage (28) en forme de saillie, qui peut s'enclencher sur une zone d'encliquetage (24) de la section de retenue (22).

8. Module de sac gonflable selon au moins l'une quelconque des revendications précédentes, **caractérisé en ce qu'**une extrémité libre (18a) opposée à la paroi de boîtier (16) d'une saillie (18) et une extrémité libre tournée vers la paroi de boîtier (16), en particulier une surface d'extrémité (24a) d'une zone d'encliquetage (24), de la section de retenue (22) se trouvent dans différents plans s'étendant respectivement plus ou moins perpendiculairement à la paroi de boîtier (16) et au moins approximativement dans le même plan s'étendant plus ou moins parallèlement à la paroi de boîtier (16).

9. Module de sac gonflable selon au moins l'une quelconque des revendications précédentes, **caractérisé en ce que** la section de verrouillage (14) s'amincit dans la direction d'une zone d'extrémité libre (20) et présente la plus faible épaisseur de matériau de préférence dans une zone coopérant avec une saillie (18), en particulier sa zone d'extrémité libre (20).

10. Module de sac gonflable selon au moins l'une quelconque des revendications précédentes, **caractérisé en ce que** l'élément de retenue (12) a une forme annulaire et présente plusieurs sections de verrouillage (14) aménagées réparties dans la direction périphérique.

11. Module de sac gonflable selon au moins l'une quelconque des revendications précédentes, **caractérisé en ce que** l'élément de retenue (12) est constitué d'acier ou d'aluminium et/ou **en ce que** le boîtier (10) est fabriqué à partir d'un matériau synthétique.

12. Procédé de fixation d'un élément de retenue (12) sur un boîtier (10) pour un sac gonflable replié (11) d'un module de sac gonflable pour véhicules à moteur, dans lequel l'élément de retenue (12) présente au moins une section de verrouillage (14), procédé dans lequel :
- la section de verrouillage (14) de l'élément de retenue (12) est déplacé avec une zone d'extrémité libre (20) dans la direction d'une saillie (18) ménagée sur la paroi de boîtier (16) de préférence plus ou moins parallèlement à la paroi de boîtier (16);
- la zone d'extrémité libre (20) de la section de verrouillage (14) est pressée contre une surface de déviation (26) de la saillie (18) s'étendant de préférence en oblique par rapport à la paroi de boîtier (18) et est par suite déviée et écartée de la paroi de boîtier (16); et
- la section de verrouillage (14) est enclenchée sur une section de retenue (22) du boîtier (10).
